# EUROPEAN PATENT APPLICATION

(11) **EP 1 603 133 A1**
(43) Date of publication of application: **07.12.2005**
(21) Application number: 05011855.3
(22) Date of filing: 01.06.2005
(51) Int. Cl.: G11B 27/028, G11B 27/031, G11B 27/034, G11B 27/036, G11B 5/588, G11B 5/55

(54) **Dubbing apparatus and dubbing method**

(30) Priority: 03.06.2004 JP 2004166239
(71) Applicant: SONY CORPORATION, Tokyo (JP)
(72) Inventor: Hirai, Jun, Shinagawa-ku Tokyo (JP)
(74) Representative: Müller - Hoffmann & Partner

(57) **Abstract**

A dubbing apparatus includes a reproduction drive (11) for reproducing reproduction of a tape recorded by a helical scan system, a recording drive (13) for recording a reproduced signal reproduced by the reproduction drive (11), a reproduction envelope evaluating unit (16) for evaluating reproduction situations of a reproduced signal corresponding to a signal recorded on the recording drive (13) and a control unit (17) for controlling the number of dubbings done by the recording drive (13) and parameters of reproduction done by the reproduction drive (11) in response to the reproduction situation evaluated by the reproduction envelope evaluating unit (17). A dubbing method also is disclosed. According to these dubbing apparatus and dubbing method, deterioration of image quality of a dubbed image can be relieved even when rectilinearity between reproduced and recorded patterns is shifted upon dubbing.

## Description

### CROSS REFERENCES TO RELATED APPLICATIONS

The present invention contains subject matter related to Japanese Patent Application JP 2004-166239 filed in the Japanese Patent Office on June 3, 2004, the entire contents of which being incorporated herein by reference.

### BACKGROUND OF THE INVENTION

### Field of the Invention:

The present invention relates to a dubbing apparatus and a dubbing method capable of recording and reproducing a reproduced signal at the same time.

### Description of the Related Art:

As a dubbing method, there has so far been proposed a dubbing method in which a digitally-recorded tape is reproduced a plurality of times so that signal blocks with excellent reproduction situations may be selectively dubbed (see Cited Patent Reference 1). The above-mentioned dubbing method is effective because deterioration of a signal up to a certain level in digital recording is not reflected on the finally-demodulated result.

Also, there has been disclosed a method in which includes a memory for storing two picture amounts consisting of a picture reproduced by a magnetic recording and reproducing apparatus for recording and reproducing a tape by using heads fixed on a rotary cylinder, a memory write control circuit and an image quality discriminating circuit. According to this method, the tape is transported in a slow mode, the same track is reproduced a plurality of times and reproduced portions with excellent image quality obtained each time the track is traced are connected. Then, each time a picture is completed, the picture is outputted and slow playback without noise can be carried out while the heads on the cylinder need not be displaced by using a suitable device such as a piezoelectric element (see Cited Patent Reference 2). According to this method, the same track is reproduced a plurality of times by using the heads fixed on the rotary cylinder and only the portions with excellent image quality of the output signal can be synthesized on the memory, whereby slow playback can be carried out.
[Cited Patent Reference 1]: Official Gazette of Japanese laid-open patent application No. 04-0335167
[Cited Patent Reference 2]: Official Gazette of Japanese laid-open patent application No. 05-145895

However, according to the related-art example, when dubbing is made by using an analog recorded tape, if rectilinearity between a reproduced tape pattern and a recorded tape pattern is displaced in the reproduction, there is a disadvantage that image quality of a dubbed image is deteriorated.

### SUMMARY OF THE INVENTION

In view of the aforesaid aspects, the present invention intends to provide a dubbing apparatus and a dubbing method in which deterioration of image quality of a dubbed image can be relieved even when rectilinearity between reproduced and recorded tape patterns is shifted upon dubbing.

According to an aspect of the present invention, there is provided a dubbing apparatus for recording and reproducing a reproduced signal at the same time. This dubbing apparatus is composed of a reproducing drive unit for reproducing reproduction of a tape recorded by a helical scan system, a recording drive unit for recording a reproduced signal reproduced by the reproducing drive unit, a reproduction situation evaluating unit for evaluating reproduced situations of the reproduced signal corresponding to a signal recorded on the recording drive unit and a control unit for controlling the number of dubbings done by the recording drive unit and parameters of reproduction done by the reproducing drive unit in response to the reproduction situation evaluated by the reproduction situation evaluating unit.

According to this dubbing apparatus, when an analog video signal, for example, is dubbed on a digital media, if rectilinearity of a tape pattern in the reproduction drive unit is not satisfactory, the control unit controls the reproduction drive unit so that the reproduction drive unit reproduces the digital media a plurality of times with the tracking positions being shifted to record the reproduced portion on the recording driving unit so that excellent portions may be selected.

Thus, a width of the head in the reproduction driving unit can be decreased and influence of crosstalk can be decreased. Also, tracking failure caused when a signal is dubbed by the reproduction driving means can be improved.

In accordance with another aspect of the present invention, there is provided a dubbing method for recording and reproducing a reproduced signal at the same time. This dubbing method is composed of a step for reproducing a tape recorded in a helical scan system by a reproduction drive unit, a step for recording a reproduced signal reproduced by the reproduction driving unit by a recording driving unit, a step for evaluating reproduction situations of the reproduced signal corresponding to a signal recorded on the recording driving unit by a reproduction situation evaluating unit and a step for controlling the number of dubbings done by the recording driving unit and parameters of reproduction done by the reproduction driving unit in response to the reproduction situation evaluated by the reproduction situation evaluating means through a control unit.

According to the present invention, even when rectilinearity of tracks of a reproduced signal is not satisfactory so that a noise is produced on a part of a picture, such noise can be relieved and dubbing with lesser noise can be carried out automatically.

Further, according to the present invention, when an analog signal recorded on a tape is digitally converted so as to be stably reproduced and it is recorded on a hard disk or an optical disc to create a library (that is, archiving), such analog signal can be recorded with satisfactory image quality.

### BRIEF DESCRIPTION OF THE DRAWINGS

FIG. 1 is a diagram showing reproduced envelope evaluations;
FIG. 2 is a flowchart to which reference will be made in explaining dubbing operations;
FIG. 3 is a schematic block diagram showing an arrangement of a dubbing apparatus according to the present invention; and
FIGS. 4A to 4C are schematic block diagrams showing examples of arrangements of signal processing units in the dubbing apparatus, wherein FIG. 4A is a schematic block diagram showing an example of an arrangement of a signal processing unit suitable for use in RF dubbing; FIG. 4B is a schematic block diagram showing an example of an arrangement of a signal processing unit suitable for use in compressed dubbing; and FIG. 4C is a block diagram showing an example of an arrangement of a signal processing unit suitable for use in twice normal speed dubbing.

### DESCRIPTION OF THE PREFERRED EMBODIMENTS

Embodiments of the present invention will be described below with reference to the drawings.

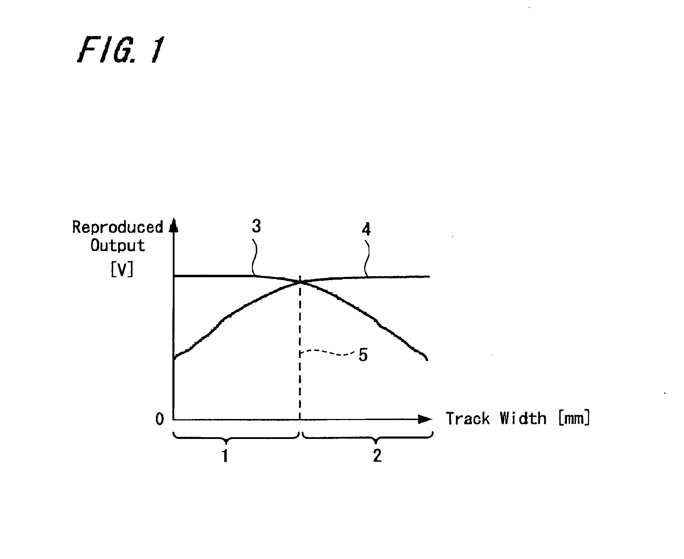

FIG. 1 of the accompanying drawings is a diagram showing characteristic curves obtained when envelopes of reproduced output signals were evaluated.

As shown in FIG. 1, since a reproduced output signal is held at relatively high level in a picture upper portion 1 of a track width in the condition in which the tracking position is set to the picture upper portion optimum tracking position 3, the evaluated result of the envelope of the reproduced output signal becomes satisfactory. Also, since a reproduced output signal is held at relatively high level in a picture lower portion 2 of the track width across a switching point 5 of a dubbed signal, the evaluated result of the envelope of a reproduced output signal becomes satisfactory.

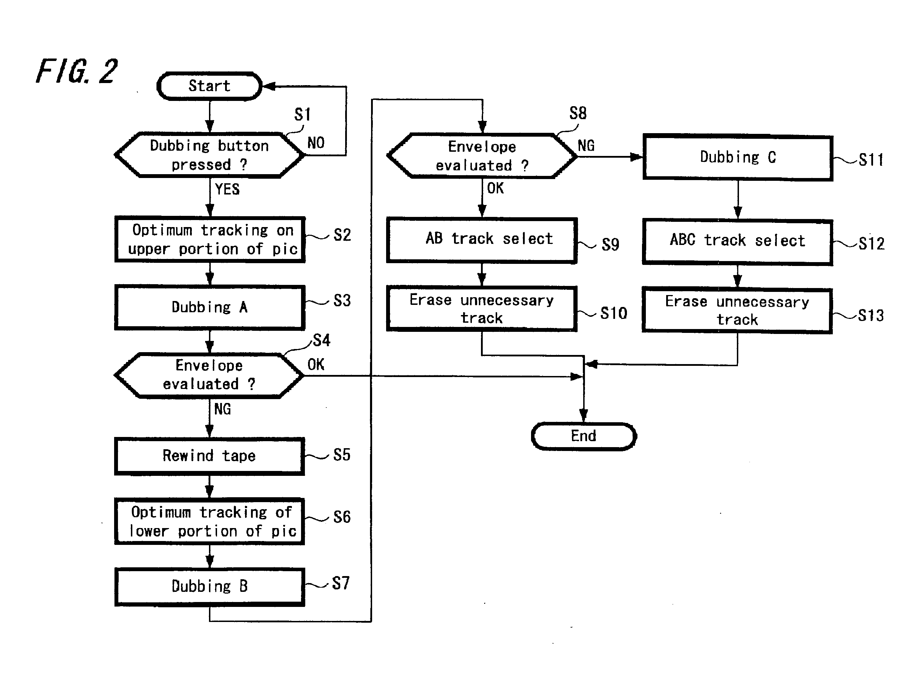

FIG. 2 is a flowchart to which reference will be made in explaining dubbing operations.

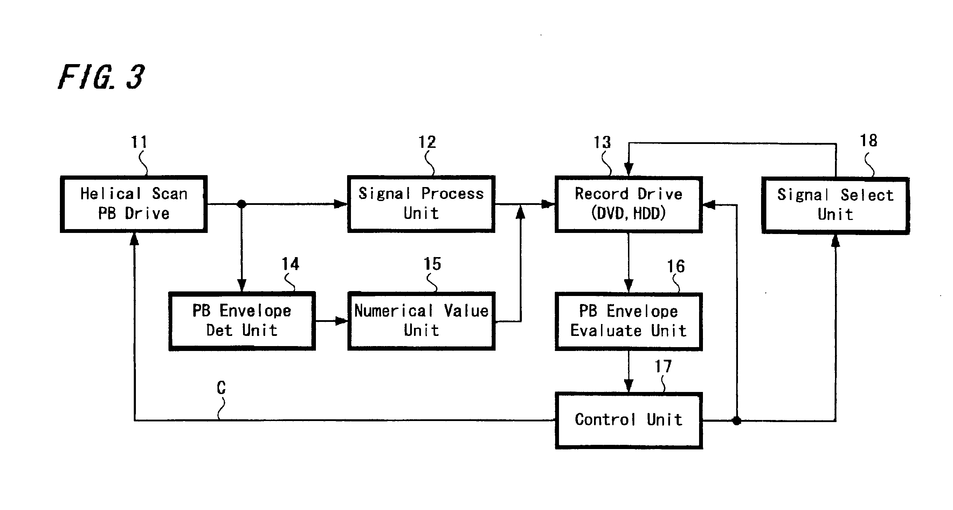

Referring to FIG. 2, and following the start of operation, control goes to a decision step S1, whereat it is determined whether or not a dubbing button is pressed. If the dubbing button is pressed as represented by a YES at the decision step S1, then control goes to the next step S2. If a NO is outputted at the decision step S1, then control goes back to the decision step S1 and the decision step S1 is repeated until the dubbing button is pressed. In the step S2, a reproduced signal obtained after a tape was scanned a plurality of times in a helical scan fashion by a helical scan reproduction drive 11 which will be described later on with reference to FIG. 3 is supplied to a signal processing unit 12, in which it is processed and recorded by using a large recording capacity and high-access speed storage such as a hard disk (HDD) (or optical disc (DVD)) as a recording drive under control of a control unit 17.

When the tape on the helical scan reproducing drive 11 is a tape with a 2-hour recording time, the signal on the upper portion of the picture is reproduced with priority during 2 hours in the state in which the tracking position of the helical scan reproducing drive 11 is controlled so as to become coincident with the position corresponding to the upper portion of the picture of the track width under control of the control circuit 17 at the step S2. Then, control goes to a step S3, whereat the signal of the upper portion of the picture is recorded on the hard disk of the recording drive 13 (that is, referred to as a "dubbing A").

Upon dubbing, as shown in FIG. 3, a reproduced envelope of the reproduced signal of the upper portion of the picture is detected by a reproduced envelope detecting unit 14, the reproduced envelope of the upper portion of the picture is converted into a numerical value by a numerical value unit 15 and a reproduced envelope numerical value of the upper portion of the picture is recorded on the hard disk of the recording drive 13. Then, control goes to a step S4, whereat a reproduced envelope evaluating unit 16 evaluates a reproduced envelope numerical value of the upper portion of the picture obtained upon dubbing based on the output level of the reproduced signal and it supplies an evaluated result to the control unit 17.

Then, control goes to a step S5, whereat the tape is rewound in the helical scan reproducing drive 11 under control of the control unit 17. Then, control goes to a step S6, whereat in the state in which the tracking position of the helical scan reproducing drive 11 is properly controlled so as to become coincident with the position corresponding to the lower portion of the picture of the track width under control of the control unit 17, optimum tracking is selected and the signal of the lower portion of the picture is reproduced with priority. Then, control goes to a step S7, whereat the signal of the lower portion of the picture is recorded on the hard disk of the recording drive 13 (referred to as a "dubbing B").

Then, control goes to the next decision step S8. In the step S8, upon dubbing, a reproduced envelope of the reproduced signal of the lower portion of the picture is detected by a reproduced envelope detecting unit 14, the reproduced envelope is converted into a reproduced envelope numerical value by the numerical value unit 15 and the reproduced envelope numerical value of the lower portion of the picture also is recorded on the hard disk of the recording drive 13. The reproduced envelope evaluating unit 16 evaluates the reproduced envelope numerical value of the lower portion of the picture obtained upon dubbing based on the output level of the reproduced signal and it supplies an evaluated result to the control unit 17.

In the case of azimuth recording, it is customary that wider tolerance relative to displacement of rectilinearity of the tape pattern is obtained by using a head wider than the track pitch. However, such head picks up a signal from the adjacent track, that is, crosstalk and hence image quality is deteriorated slightly. If the width of the head is made narrower than the track pitch, then crosstalk can be decreased and hence image quality can be improved. However, in the case of not self-recording and reproduction (a recorder and a reproducer are common) but in the case of so-called compatible recording (a recorder and a reproducer are different), a problem of displacement of rectilinearity tends to arise.

In the first reproduction, tracking is automatically selected with priority of the reproduced signal of the upper portion of the picture at the step S2, and control goes to the step S3, whereat the reproduced signal of the upper portion is dubbed on the hard disk of the recording drive 13. In that case, if the RF envelope of the recorded signal is of square shape as represented by an OK at the decision step S4, then the first dubbing is ended. If the RF envelope corresponding to the lower portion of the picture of the RF envelope is lowered as represented by an "NG" at the decision step S4, control goes to the step S5, whereat after the end of the first dubbing, the tape is automatically rewound. Then, control goes to the step S6, whereat the tracking is shifted so that the RF envelope corresponding to the lower portion of the picture may be maximized. Then, the reproduced signal is gain dubbed on the hard disk of the recording drive 13 at the step S7.

Then, control goes to a step S9, whereat one track in which the envelope of the reproduced signal is large is selected from the dubbed two tracks as a proper track. Then, control goes to a step S10, whereat those portions which are available for dubbing may be left in the hard disk or they may be erased. Further, defragmentation or defragging may be carried out in order to make writing places become well contiguous physically.

While the dubbing is carried out twice as described above, if the track width of the reproducing head is narrowed more, for example, it is decreased 1/3 track each to increase the number of dubbing at a step S11 (referred to as a "dubbing C"), then image quality can be improved more. In this case, the track portion in which the level of the envelope is low is dubbed and the reproduced track is shifted, which will be repeated until the envelope evaluated value exceeds a reference point.

FIG. 3 is a block diagram showing an arrangement of the dubbing apparatus.

As shown in FIG. 3, the dubbing apparatus includes the helical scan reproducing drive 11 for reproducing the reproduced signal of the tape recorded in the helical scan system, the recording drive 13 for recording the reproduced signal reproduced by the helical scan reproducing drive 11, the reproducing envelope detecting unit 14 for detecting the reproduced envelope of the upper portion of the picture of the reproduced signal, the numerical value unit 15 for converting the reproduced envelope of the upper portion of the picture into the numerical value, the reproduced envelope evaluating unit 16 for evaluating the reproduced envelope of the reproduced signal corresponding to the signal recorded on the recording drive 11 and the control unit 17 for controlling the number of dubbings done by the recording drive 13 and the parameters of the reproduction done by the helical scan reproducing drive 11 based on a control signal C.

Also, the dubbing apparatus further includes the signal processing unit 12 for processing the reproduced signal reproduced by the helical scan reproducing drive 11 before the reproduced signal is recorded on the recording drive 13 and a signal selection unit 18 for supplying a selection signal, which is used to select signal, to the recording drive 13.

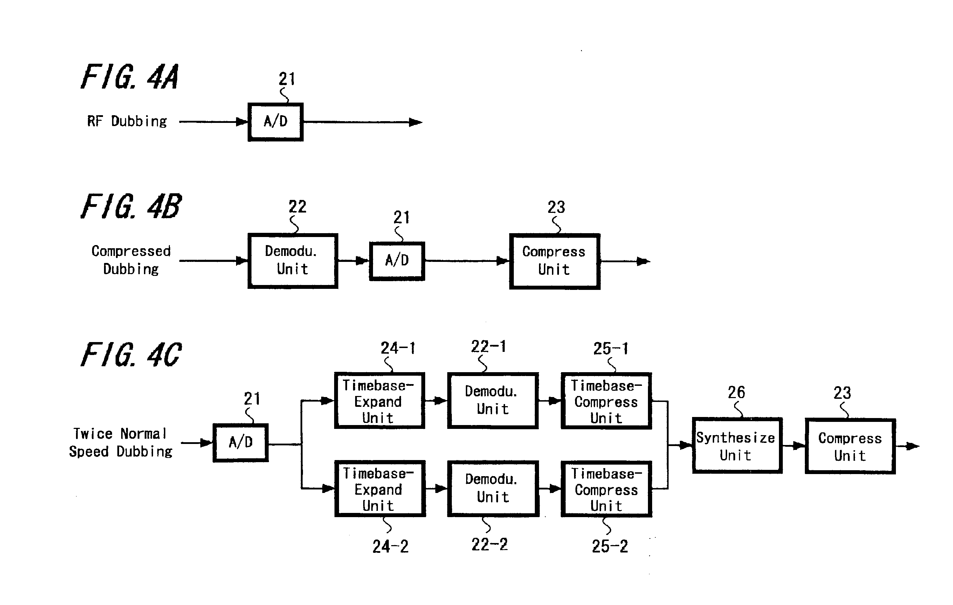

FIGS. 4A to 4C are schematic block diagrams showing examples of signal processing units, wherein FIG. 4A is a block diagram showing an example of a signal processing unit suitable for use with RF dubbing; FIG. 4B is a block diagram showing an example of a signal processing unit suitable for use with compressed dubbing; and FIG. 4C is a block diagram suitable for use with twice normal speed dubbing, respectively.

In the RF dubbing shown in FIG. 4A, an RF signal is supplied to an A/D (analog-to-digital) converting unit 21, in which it is converted into a digital signal.

In the compressed dubbing shown in FIG. 4B, the RF signal is supplied to a demodulating unit 22 and thereby demodulated. Then, a demodulated signal from the demodulating unit 22 is converted into a digital signal by the A/D converting unit 21 and the digital signal obtained from the A/D converting unit 21 is compressed by a compressing unit 23.

In the twice normal speed dubbing shown in FIG. 4C, the RF signal is converted into the digital signal by the A/D converting unit 21. The digital signal from the A/D converting unit 21 is timebase-expanded by timebase-expanding units 24-1 and 24-2 at every odd-number field and every even-number field. The thus timebase-expanded signals are supplied to demodulating units 22-1 and 22-2 and thereby demodulated. The thus demodulated signals are supplied to timebase-compressing units 25-1 and 25-2, in which they are timebase-compressed. The thus timebase-compressed odd-field and even-field signals from the timebase-compressing units 25-1 and 25-2 are synthesized by a synthesizing unit 24, and the synthesized signal is compressed by the compressing unit 23.

Also, the present invention is not limited to the above-mentioned arrangement and the following variant is also possible. That is, in order to save a dubbing time, the reproduced signal may be dubbed by the recording drive 13 even when the tape is rewound by the reproducing drive 11 and hence the reproduced signal may be dubbed in the outward recording path and the inward recording path.

Also, if the tape is transported at ⁻n (integer) times normal speed and the drum is transported at ⁻n times normal speed in the reproducing drive 11, the envelope of the reproduced signal can be obtained similarly to that of the n times normal speed. In this case, there is required a circuit for reversing the order in which the signal may be read out by the reproducing drive 11. Further, in the reproducing drive 11, the tape may be transported at ⁻n times normal tape speed and the drum may be transported at n times normal speed. This may be sufficient depending on the slanting of the track.

Also, heads with different heights may be added to (or applied to) the reproducing drive 11 and they may be switched in response to the envelope of the reproduced signal or they may be used together with a plurality of dubbings at the same time.

Also, there is a possibility that a displacement of a timebase will exceed tolerance at the connected portion of a plurality of dubbing signals in the recording drive 13. To solve this problem, the recording drive 13 may obtain a fine adjusted amount of the time base by matching a plurality of dubbing signals.

Also, even when the rectilinearity of the track is correct in the reproducing drive 11, if the reproduced signal is dubbed by the recording drive 13 and the reproduced signals are synthesized, then it is possible to decrease noises. In this case, it is possible to decrease different noises, such as heat noises and slide noises, each time the signal is reproduced.

Further, if the track is slightly shifted (for example, 1/10 of the track pitch) in the reproducing drive 11 and a plurality of reproduced outputs are synthesized in the recording drive 13, then crosstalk components from the adjacent track become different, which bring the state in which the crosstalk can be decreased relatively. When the rectilinearity of the track is not correct, it is possible to partly decrease the noise according to this theory. When the rectilinearity of the track is correct, if crosstalk influence is unavoidable, then it is possible to decrease the crosstalk noise. The track may be shifted not by the reproduced envelope evaluated value but by a plurality of fixed values.

Further, it is frequently observed that tracking may be unstable due to damages on the tape edge in the reproducing drive 11. In that case, an optimum signal may not be fixed even though the reproduced signal is dubbed a plurality of times in the recording drive 13. Accordingly, if the detected value of the RF envelope is recorded together with the reproduced output by the recording drive 13, then it is possible to select optimum switching points following fluctuations from a time standpoint. In such a case, since the reproduced envelope evaluated value becomes unstable, if a plurality of fixed values is given as the tracking shift amount of the reproduction, operations of the whole of the system can be stabilized.

Although it is customary that a signal is compressed by an MPEG (moving picture experts group)-2 when a signal is recorded on the hard disk serving as the recording drive, if a GOP (group of picture) contains a noise portion, it is unavoidable that an ordinary portion will be affected. To avoid this shortcoming, a signal may not be compressed and then recorded or a signal may be compressed by only a DCT (discrete cosine transform) format or by a wavelet format and then recorded. Alternatively, a signal may again compressed by a suitable compression method such as the MPEG-2 after the dubbed result was selected or a signal may be compressed by a suitable compression method such as the MPEG-2 when a signal is saved in a DVD (digital versatile disc).

According to the present invention, even when rectilinearity of tracks of a reproduced signal is not satisfactory so that a noise is produced on a part of a picture, such noise can be relieved and dubbing with lesser noise can be carried out automatically.

Further, according to the present invention, when an analog signal recorded on a tape is digitally converted so as to be stably reproduced and it is recorded on a hard disk or an optical disc to create a library (that is, archiving), such analog signal can be recorded with satisfactory image quality.

It should be understood by those skilled in the art that various modifications, combinations, sub-combinations and alterations may occur depending on design requirements and other factors insofar as they are within the scope of the appended claims or the equivalents thereof.

## Claims

1. A dubbing apparatus for recording and reproducing a reproduced signal at the same time, comprising:
reproducing drive means for reproducing reproduction of a tape recorded by a helical scan system;
recording drive means for recording a reproduced signal reproduced by said reproducing drive means;
reproduction situation evaluating means for evaluating reproduced situations of said reproduced signal corresponding to a signal recorded on said recording drive means; and
control means for controlling the number of dubbings done by said recording drive means and parameters of reproduction done by said reproducing drive means in response to the reproduction situation evaluated by said reproduction situation evaluating means.

2. A dubbing apparatus according to claim 1, wherein said control means for associating said reproduction driving means and said recording driving means, selects tracking position reproduced by said reproduction drive means in response to observed results of a reproduced envelope signal which is said reproduction situation and automatically controls the number of dubbings done by said recording drive means.

3. A dubbing apparatus according to claim 2, wherein said control means controls dubbings in such a manner that an excellent portion is selected from signals dubbed a plurality of times by said recording driving means in response to observed results of said reproduced envelope signal.

4. A dubbing apparatus according to claim 3, wherein said control means controls said recording driving means so as to dub a reproduced signal in order to save a dubbing time even when a tape is rewound by said reproduction driving means.

5. A dubbing apparatus according to claim 3, wherein said control means controls synthesizes signals dubbed a plurality of times by said recording driving means in order to decrease a noise.

6. A dubbing apparatus according to claim 3, wherein said control means shifts a tracking position of said reproduction driving means in order to decrease a crosstalk noise and synthesizes signals dubbed a plurality of times by said recording driving means.

7. A dubbing apparatus according to claim 3, wherein said control means for adjusting timebases of signals dubbed a plurality of times by said recording driving means with reference to matching of signals.

8. A dubbing apparatus according to claim 3, wherein said control means records a representing value of said reproduced envelope signal when a signal is dubbed by said recording driving means and selects an optimum signal from signals dubbed a plurality of dubbings by said recording driving means even when tracking of said reproducing driving means is unstable.

9. A dubbing apparatus according to claim3, wherein said control means controls said recording driving means in such a manner that said recording driving means selectively dubs only portions in which a sufficient reproduced signal output is not obtained with reference to said reproduced envelope signal.

10. A dubbing apparatus according to claim 3, wherein said control means does not compress a signal or compresses a signal in an intra-frame fashion to maintain freedom of a signal switching point when recording is dubbed by said recording driving means.

11. A dubbing apparatus according to claim 8, wherein said control means supplies a control signal to control said reproduction driving means and a selection signal to select signals for said recording driving means.

12. A dubbing method for recording and reproducing a reproduced signal at the same time, comprising the steps of:
a step for reproducing a tape recorded in a helical scan system by a reproduction drive means;
a step for recording a reproduced signal reproduced by said reproduction driving means by a recording driving means;
a step for evaluating reproduction situations of said reproduced signal corresponding to a signal recorded on said recording driving means by a reproduction situation evaluating means; and
a step for controlling the number of dubbings done by said recording driving means and parameters of reproduction done by said reproduction driving means in response to the reproduction situation evaluated by said reproduction situation evaluating means through a control means.
